# EUROPÄISCHE PATENTSCHRIFT

(11) **EP 0 337 284 B1**
(45) Veröffentlichungstag und Bekanntmachung des Hinweises auf die Patenterteilung: **03.08.1994**
(21) Anmeldenummer: 89106012.1
(22) Anmeldetag: 06.04.1989
(51) Int. Cl.: C05C 1/02, B01J 2/28

(54) **Verfahren zur Staub- und Feinstkornunterdrückung während der Granulation von Ammonnitrat**
Process for suppressing dust and fines during granulation of ammonium nitrate
Procédé de suppression de la poussière et des fines bors de la granulation de nitrate d'ammonium

(30) Priorität: 09.04.1988 DE 3811913
(43) Veröffentlichungstag der Anmeldung: 18.10.1989
(73) Patentinhaber: Uhde GmbH, 44141 Dortmund (DE)
(72) Erfinder: Scheibler, Erich, Dipl.-Ing., D-4600 Dortmund 30 (DE); Driller, Josef, Dipl.-Ing., D-4600 Dortmund 30 (DE); Nebel, Robert, Dipl.-Ing., D-5860 Iserlohn 9 (DE)

(56) Entgegenhaltungen:
- EP-A- 0 207 222
- AU-B- 484 229
- FR-A- 1 469 715
- GB-A- 373 211
- NL-A- 36 881
- US-A- 3 867 124

## Beschreibung

Die Erfindung betrifft ein Verfahren zur Staub- und Feinstkornunterdrückung während der Granulation von Ammonnitrat mit einem Stickstoffgehalt von 28 - 34,5 % N.

Düngemittelammonnitrat soll in weitgehender Kugelform vorliegen und ein möglichst enges Korngrößenspektrum von ca. 1 - 4 mm ⌀ aufweisen. Da jeder Granulierprozeß ein Gesamtprodukt mit Korngrößen außerhalb 1 bis 4 mm ⌀ erbringt, ist eine spezielle Absiebung von Unter- und Überkorn erforderlich. Das Überkorn wird gebrochen und zusammen mit dem Unterkorn zurück zur Granuliervorrichtung geführt. Granulierprozesse sind daher Kreislaufprozesse für eine Teilgutmenge und in ihrem Energie- und Investitionsaufwand abhängig von der jeweils zurückzuführenden Kreislaufgutmenge.

Zwar werden zweistufige Granulierverfahren schon beschrieben. Jedoch werden jeweils zwei grundsätzlich verschiedene Granuliermethoden miteinander kombiniert; z.B. Prillierung mit Trommelgranulierung oder Trommelgranulierung mit Eließbettgranulierung. Zum Beispiel wird in den Patentschriften DE-2164731 und FR-7246363 die Kornvergrößerung von ammonnitrathaltigen Düngemitteln dadurch erzielt, daß vor dem Prillen ein Teilstrom der Schmelze abgezweigt und in einem Trommelgranulator auf die Prills aufgesprüht wird. Die Prills werden als Vorprodukt benötigt, bevor sie durch Zugabe weiterer Schmelze zum Endprodukt vergrößert werden.

Durch Einstellung von optimalen Granulierbedingungen (z.B. flüssigphase, Granuliertemperatur und Additiven) kann der Fehlkornbildung jedoch nur bedingt entgegengesteuert werden.

Die europäische Patentanmeldung EP 0 207 222 befaßt sich mit der Granulation von Ammonnitrat, die in zwei Schritten durchgeführt wird. Im ersten Schritt wird in einem Schneckengranulator ein Rohgranulat hergestellt, das im zweiten Schritt in einer nachgeschalteten Poliertrommel endgranuliert und verdichtet wird.

Dabei werden der Ammonnitratschmelze im ersten Schritt Granulierhilfen zugesetzt, die einmal gegen Desintegrationserscheinungen stabilisieren und zum anderen den Erstarrungspunkt der Schmelze so verändern, daß das im Schneckengranulator erzeugte Rohgranulat verformbar bleibt und in der nachfolgenden Poliertrommel in seiner Form gerundet und in sich verdichtet werden kann.

Als Granulierhilfe und als Additiv für die Verbesserung der Produkteigenschaften (Lagerfähigkeit, Öladsorption) wird Magnesiumnitrat und/oder Aluminiumsulfat vorgesehen, das zu der Ammonnitratschmelze in den Schneckengranulator gegeben wird. Das Salz wird in das Granulat eingemischt und erhöht den Anteil an flüssiger Phase in der Granulierzone.

Die für die Granulation erforderliche Flüssigphase wird allein im Schneckengranulator benötigt, jedoch nicht in der Poliertrommel, weil für die Formgebung in der Poliertrommel das Granulat lediglich noch nicht durchgehärtet sein darf.

Hierdurch wird die Bildung von Staub und/oder Feinstkorn im produzierten Granulat **nicht** unterbunden.

Die britische Patentanmeldung GB 373 211 beschreibt einen Prozeß, der durch die Zugabe von Salzkombinationen ein Produkt erzeugt, das bei der Lagerung eine deutlich verminderte Zusammenbackneigung hat.

Als Anti-Backmittel werden Sulfate des Aluminiums oder Eisens vorgeschlagen, die aber vor oder während des Prozesses mit Ammoniumsulfat zu dem entsprechenden Doppelsatz umgesetzt werden, wobei die Umsetzung auch in Ammonnitratschmelze durchgeführt werden darf.

Ausdrücklich ist verboten, Eisensulfat allein in Ammonnitratschmelze einzurühren.

Die in GB 373 211 publizierte Lehre hat ein anderes Ziel als die vorliegende Erfindung, nämlich die Lagereigenschaften des Endproduktes zu verbessern. Das **dehydratisierte** Doppelsatz wirkt dabei als im Produkt eingeschlossenes Trockenmittel, das aus der Umgebungsluft in das Produkt diffundierende Feuchtigkeit als Kristallwasser abbindet. Das Produkt wird quasi trocken gehalten. Die Neigung zum Zusammenbacken während der Lagerzeit wird reduziert.

Letzteres wird auch erreicht, wenn das Doppelsalz in **dehydrierter** Form als Puderstoff auf das Fertigprodukt aufgebracht wird. Die Bildung eines Staub- und Feinstkornanteils im produzierten Granulat wird nach der Lehre von GB 373 211 nicht vermieden.

Aufgabe der Erfindung ist die Schaffung einer Lösung mit der in einer Granulieranlage ein Ammonnitrat hergestellt werden kann, mit einem engen Korngrößen-Spektrum, d.h. eine möglichst große Ammonnitratmenge soll mit einer Korngröße von 1 - 4 mm ⌀ produziert werden. Die Fehlkornbildung insbesondere im Feinkornbereich ist zu unterdrücken.

Mit einem Verfahren der eingangs bezeichneten Art wird diese Aufgabe gemäß der Erfindung dadurch gelöst, daß in einer ersten Granulierzone nach bekannten Granulierverfahren in Schnecken-, Trommel-, Spherodizer- und/oder Tellergranulatoren das Rohgranulat gebildet wird und in einer zweiten Granulierzone bei 100 bis 125 °C durch Zugabe eines in geeigneter Menge kristallwasserhaltigen zwei- oder dreiwertigen Eisensulfates die in der ersten Granulierzone entstandenen Staub- und/oder Feinstkornanteile an das Rohgranulat fixiert werden.

Es hat sich gezeigt, daß die Erzeugung von Granulierammonnitrat im engen Korngrößen-Spektrum dadurch möglich wird, daß in die zweite Granulierzone kristallwasserhaltiges Eisensulfat in einer Menge von 0,1 - 1,10 Gew.% gerechnet als FeSO₄ und bezogen auf die Produktion, eingeführt werden. Durch Schmelzen im eigenen Kristallwasser entsteht ein zweites Mal eine Flüssigphase, die die Aufgranulation des Staubes und des Feinstkorns ermöglicht.

Durch das erfindungsgemäße Verfahren wird der Anteil an Unterkorn im Bereich der zweiten Granulierzone wesentlich gemindert. Dadurch mindert sich gleichzeit die Rücklaufmenge für das Unterkorn.

Diese Minderung der Rücklaufmenge für das Unterkorn hat gleichzeitig eine Minderung der aufzuwendenden Apparateinvestitionen und damit verbunden eine Minderung des Energieaufwandes zur Folge.

In Ausgestaltung sieht die Erfindung vor, daß equivalenter Zusatzstoff wie z.B. MgSO₄ x 7 H₂O zugeführt wird. Dieses MgSO₄ x 7 H₂O ist ein bei der Granuliertemperatur langsam im Kristallwasser schmelzendes Salz.

Besonders vorteilhafte Ergebnisse werden erzielt, wenn beide Granulierzonen in einem Granulator integriert sind.

Es werden aber auch noch bessere Ergebnisse, als bisher mit standardisierten Prozessen erreichbare, erzielt, wenn nach weiteren Ausgestaltungen der Erfindungen einer Tellergranulation eine Trommelgranulation folgt. Desweiteren kann im Rahmen des Erfindungsgedankens die zweite Granulierzone gleichzeitig mit einer Trockenzone kombiniert werden.

Die Erfindung wird nachstehend anhand von Beispielen erläutert, ohne daß die Erfindung hierauf beschränkt wäre.

### Beispiel 1

In einer Produktionsanlage wird abwechselnd Kalkammonsalpeter mit 26 - 27,5 % oder Ammonnitrat mit 33,5 % N produziert. Ohne Zusatz von Eisensulfat in den Granulator werden für die Produktion vom Ammonnitrat mit den charakteristischen Daten

| | |
|---|---|
| N-Gehalt: | 33,5 % |
| H₂O-Gehalt: | 0,2 % (Karl-Fischer-Methode) |
| Granulierzusatz: | 0,83 % |
| Kornhärte: | 3,6 kg |

folgende Siebanalysen gemessen (in Gew.-%):

| | Produkt | nach Granulation | Rücklauf |
|---|---|---|---|
| + 5 mm | 0 | 11,4 | 0 |
| + 4 mm | 0,5 | 15,1 | 1,0 |
| + 3,15 mm | 24,4 | 21,6 | 4,2 |
| + 2 mm | 96,0 | 56,2 | 26,3 |
| + 1 mm | 99,0 | 88,3 | 76,7 |
| + 0,5 mm | 100,0 | 97,3 | 96,5 |
| - 0,5 mm | 0 | 2,7 | 3,5 |
| Summe | 100,0 | 100,0 | 100,0 |

Der Gutkornanteil (2-4 mm) beträgt 41,1 % (56,2 - 15,1) und der Feinkornanteil (kleiner 1 mm) beträgt 11,7 % (100 - 88,3) nach der Granulation.

### Beispiel 2

In der gleichen Produktionsanlage werden bei gleicher Produktion mit Zusatz von Eisensulfat in den Granulator für die Produktion von Ammonnitrat mit den charakteristischen Daten

| | |
|---|---|
| N-Gehalt: | 33,5 % |
| H₂O-Gehalt: | 0,25 % (Karl-Fischer-Methode) |
| Granulierzusatz: | 0,98 % (incl. FeSO₄) |
| Kornhärte: | 3,3 kg |

folgende Siebanalysen gemessen (in Gew.-%):

| | Produkt | nach Granulation | Rücklauf |
|---|---|---|---|
| + 5 mm | 0 | 7,4 | 0 |
| + 4 mm | 6,2 | 15,7 | 1,5 |
| + 3,15 mm | 45,2 | 36,5 | 9,9 |
| + 2 mm | 99,2 | 81,5 | 47,7 |
| + 1 mm | 100,0 | 98,8 | 87,6 |
| + 0,5 mm | 0 | 99,5 | 98,3 |
| - 0,5 mm | 0 | 0,5 | 1,7 |
| Summe | 100,0 | 100,0 | 100,0 |

Nach der Granulation beträgt der Gutkornanteil 65,8 % (81,5 - 15,7) und der Feinkornanteil 1,2 % (100 - 98,8).
Gegenüber dem Beispiel 1 ist der Feinkornanteil um fast 90 % reduziert mit der Folge, daß der Gutkornanteil ansteigt. Aufgrund des erhöhten Gutkornanteils wird während der Absiebung ein größerer Produktstrom dem Kreislauf entzogen, d.h. die Menge an Rücklauf wird reduziert. Um optimal Granulierbedingungen bezüglich Flüssigphase und Granuliertemperatur einzuhalten, wird etwas noch nicht gekühltes Produkt in den Rücklauf gegeben. Dennoch ist die gesamte Rücklaufmenge geringer als im Falle, daß kein Eisensulfat zugegeben wird. Das bedeutet, daß die Kapazität der Anlage entsprechend gesteigert und Energie in der Trocknung gespart wird.

## Patentansprüche

1. Verfahren zur Staub- und Feinstkornunterdrückung während der Granulation von Ammonnitrat mit einem Stickstoffgehalt von 28 - 34,5 % N dadurch gekennzeichnet, daß in einer ersten Granulierzone nach bekannten Granulierverfahren in Schnecken-, Trommel-, Spherodizer- und/oder Tellergranulatoren das Rohgranulat gebildet wird und in einer zweiten Granulierzone bei 100 bis 125 °C durch Zugabe eines in geeigneter Menge kristallwasserhaltigen zwei- oder dreiwertigen Eisensulfates die in der ersten Granulierzone entstandenen Staub- und/oder Feinstkornanteile an das Rohgranulat fixiert werden.

2. Verfahren nach Anspruch 1, dadurch gekennzeichnet, daß das Eisensulfat in einer Menge von 0,1 bis 1,0 Gew.% gerechnet als FeSO₄ und bezogen auf die Produktion in die zweite Granulierzone gegeben wird.

3. Verfahren nach Anspruch 1, dadurch gekennzeichnet, daß ein zu Eisensulfat equivalenter Zusatzstoff, wie z.B. MgSO₄ x 7 H₂O eingeführt wird.

4. Verfahren nach Anspruch 1 bis 3, dadurch gekennzeichnet, daß beide Granulierzonen in einem Granulator integriert sind.

5. Verfahren nach Anspruch 1, dadurch gekennzeichnet, daß einer Tellergranulation eine Trommelgranulation folgt.

6. Verfahren nach Anspruch 1, dadurch gekennzeichnet, daß die zweite Granulierzone in einer Trockenzone integriert ist.

## Claims

1. Process for the suppression of dust and fine particles during the granulation of ammonium nitrate with a nitrogen content of 28 to 34.5 %, characterized in that
raw granules are formed in a first granulating zone by established granulation processes in screw, drum, pherodizer and/or disk type granulators; and that dust and/or fine particles that occur in the first granulating zone are absorbed by the raw granules at 100 to 125°C in a second granulating zone by the addition of bivalent or trivalent iron sulphate containing an appropriate amount of crystallization water.

2. Process, as set forth in claim 1, characterized in that 0.1 to 1.0% wt. iron sulphate, calculated as FeSO4, is added to the second granulating zone of the production facility.

3. Process, as set forth in claim 1, characterized in that an additive equivalent to iron sulphate, e.g. MgSO4 x 7 H2O, is admixed.

4. Process, as set forth in claims 1 to 3, characterized in that both granulating zones are integrated into one granulator.

5. Process, as set forth in claim 1, characterized in that a drum granulator is arranged downstream of the disk granulator.

6. Process, as set forth in claim 1, characterized in that the second granulating zone is integrated into a drying zone.

## Revendications

1. Procédé pour la suppression de particules fines et de poussière pendant la granulation de nitrate d'ammonium avec une teneur en nitrogène de 28 à 34,5 % et caractérisé en ce que la granulation a lieu selon une méthode connue dans une première zone de granulation qui consiste en un granulateur à vis, à tambour, à "pherodizer" et/ou à disque et en ce que la poussière et/ou les particules fines obtenues dans la première zone de granulation sont absorbées par les granulés bruts à une température de 100 à 125°C dans une deuxième zone de granulation, c'est-à-dire on y ajoute la quantité nécessaire de sulfate de fer bivalent ou trivalent à une teneur appropriée en eau de constitution.

2. Procédé selon la revendication 1, caractérisé en ce que le sulfate de fer est ajouté en une quantité de 0,1 à 1,0% en poids, sous forme de FeSO4, au niveau de la deuxième zone de granulation de l'usine de production.

3. Procédé selon la revendication 1 caractérisé en ce qu'un additif équivalent au sulfate de fer, tel que MGSO4 x 7 H2O est ajouté selon la dite méthode.

4. Procédé selon les revendications 1 à 3, caractérisé en ce que les deux zones de granulation sont intégrées dans un seul granulateur.

5. Procédé selon la revendication 1, caractérisé en ce que un granulateur à tambour est disposé en aval du granulateur à disque.

6. Procédé selon la revendication 1, caractérisé en ce que la deuxième zone de granulation est intégrée dans une zone de séchage.
